Europäisches Patentamt

European Patent Office

Office européen des brevets

(19)

(11) Numéro de publication : **0 364 919 B1**

## (12) FASCICULE DE BREVET EUROPEEN

(45) Date de publication du fascicule du brevet :
**15.04.92 Bulletin 92/16**

(51) Int. Cl.[5] : **G01N 3/04,** B23Q 3/06,
**G01N 3/30**

(21) Numéro de dépôt : **89119162.9**

(22) Date de dépôt : **16.10.89**

(54) **Dispositif permettant de bloquer et de libérer brusquement une barre de test soumise à des efforts de traction et/ou de torsion.**

(30) Priorité : **20.10.88 LU 87368**

(43) Date de publication de la demande :
**25.04.90 Bulletin 90/17**

(45) Mention de la délivrance du brevet :
**15.04.92 Bulletin 92/16**

(84) Etats contractants désignés :
**BE DE ES FR GB GR IT LU NL**

(56) Documents cités :
**EP-A- 0 209 889
EP-A- 0 210 602
FR-A- 2 229 967
US-A- 3 511 444
JOURNAL OF TESTING AND EVALUATION,
vol. 16, no. 3, mai 1988, pages 253-256, American Society for Testing and Materials, Astm,
Philadelphia, PA, US; G. FERRON et al.:
"Design and development of a biaxial
strength testing device"
JOURNAL OF PHYSICS E, SCIENTIFIC INSTRUMENTS, vol. 8, no. 3, mars 1975, pages
178-179, Bristol, GB; M.W.B. LOCK: "A symmetrical straining jig for use under the microscope"**

(73) Titulaire : **COMMUNAUTE EUROPEENNE DE
L'ENERGIE ATOMIQUE (EURATOM)
Bâtiment Jean Monnet-DG XIII/A1 Plateau du
Kirchberg
L-2920 Luxembourg (LU)**

(72) Inventeur : **Verheyden, Nicole
E. Solvaystraat 34
Leuven (BE)**
Inventeur : **Montagnani, Mario
via G. Rossi, 5
Bologna (IT)**
Inventeur : **Albertini, Carlo
via dei Pini, 17
Ispra (IT)**
Inventeur : **Forlani, Mario
via D. Bolla, 2
Sesto Calende (IT)**
Inventeur : **Prosdocimi, Gianluigi
via Bossi, 15
Azzate (IT)**

(74) Mandataire : **Weinmiller, Jürgen
Lennéstrasse 9 Postfach 24
W-8133 Feldafing (DE)**

# Description

L'invention se réfère à un dispositif permettant de bloquer et de libérer brusquement au moins une barre de test soumise à des efforts de traction et/ou de torsion.

Dans le document EP-A1 0 209 889, on décrit un dispositif de fixation d'une barre de test en traction axiale. Cette barre de test comporte deux épaulements symétriques par rapport à un plan incluant l'axe de la barre. Deux bras articulés sur deux paliers fixes s'appliquent de part et d'autre par leurs extrémités libres contre cet épaulement, de sorte que le plan de mouvement des bras soit perpendiculaire au plan de symétrie des épaulements et inclut l'axe de la barre. Un boulon à fragilité étalonnée réunit les extrémités libres des deux bras tangentiellement à cette barre. Une charge explosive est appliquée audit boulon pour le détruire au moment voulu et pour libérer ainsi la barre.

Un tel dispositif ne sert à fixer une barre de test qu'en traction axiale. De plus, il nécessite des épaulements de formes très bien définies.

Le but de l'invention est donc de proposer un dispositif qui se prête également à bloquer une barre de test soumise à des efforts de torsion. En outre, cette barre de test ne doit pas comporter des formes adaptées audit dispositif.

Ce but est atteint selon l'invention par le fait que la barre est coincée par friction entre un poinçon mobile et une matrice stationnaire, la charge du poinçon agissant perpendiculairement à l'axe de la barre, que le poinçon est composé d'une pièce d'appui s'appuyant sur la barre, d'une pièce d'attaque de la charge, qui est disposée en face de la pièce d'appui, de quatre plaques rectangulaires disposées en parallélogramme entre lesdites pièces d'appui et d'attaque tel que deux plaques voisines reposent chacune par l'une de leurs grandes arêtes sur la pièce d'appui et que les deux autres plaques reposent chacune par l'une de leurs grandes arêtes sur la pièce d'attaque, et d'un pont à fragilité étalonnée qui est en contact avec les arêtes restantes des quatre plaques et empêche le parallélogramme de s'aplatir sous l'effort de la charge, tant que celle-ci n'est pas susceptible de casser le pont.

De préférence, le pont s'étend parallèlement à l'axe de la barre, car, ainsi, la rupture du pont induit le moins possible de forces parasites dans la barre de test.

Dans une mise en oeuvre préférée de l'invention, le pont est composé d'un boulon à fragilité étalonnée, d'une vis et de deux cales, dont chacune est en contact avec deux desdites plaques, les cales étant traversées par ledit boulon.

Il est possible de bloquer simultanément plusieurs barres avec le dispositif selon l'invention, en particulier deux barres qui sont disposées en alignement, une extrémité de chaque barre étant coincée entre le poinçon et la matrice.

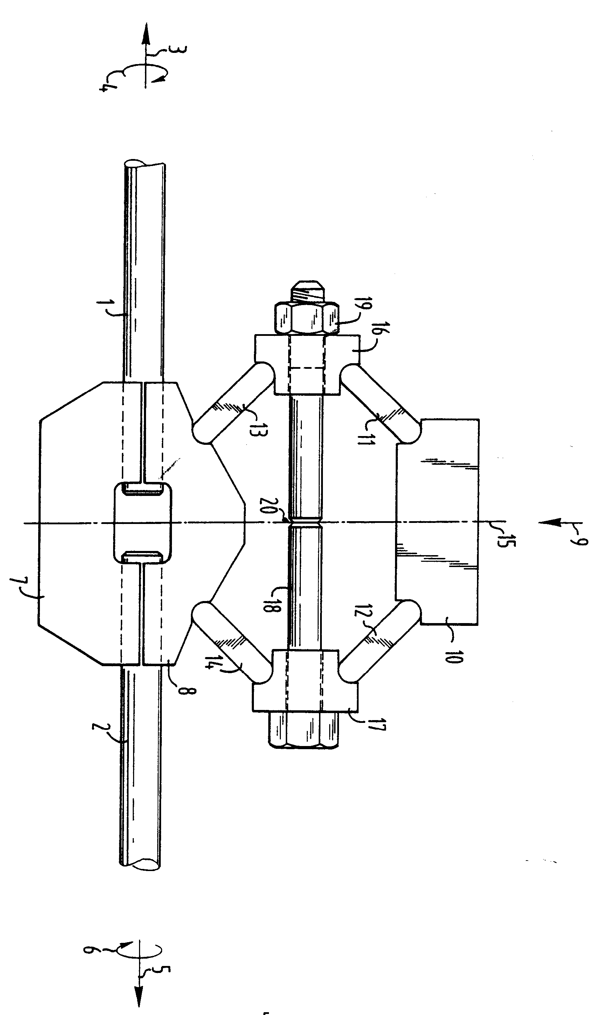

L'invention sera décrite ci-après plus en détail à l'aide d'un exemple de réalisation et du dessin unique représentant ce dispositif en vue latérale.

Sur la figure, on voit deux barres de test 1 et 2 en alignement, qui sont susceptibles d'être soumises à des efforts de traction et de torsion, ces efforts étant représentés par des flèches 3-4 et 5-6 respectivement. Une extrémité de chaque barre est logée dans une rainure respective d'une matrice 7, qui fait partie d'une structure stationnaire non représentée. Les extrémités des barres 1 et 2 sont coincées à friction entre ladite matrice et une pièce d'appui 8, qui lui fait face et qui comporte également des rainures pour recevoir un peu moins que la moitié de la circonférence des barres de test 1 et 2. La matrice 7 ne touche donc pas la pièce d'appui 8 lorsque les barres 1 et 2 sont insérées entre elles.

La pièce d'appui 8 fait partie d'un poinçon qui exerce une charge sur elle perpendiculairement à l'axe des barres et représenté par une flèche 9. Cette charge, par exemple d'origine hydraulique, est transmise à la pièce d'appui 8 à travers les différents éléments du poinçon et en particulier à travers une pièce d'attaque 10 et quatre plaques rectangulaires 11 à 14, qui sont disposées en parallélogramme entre la pièce d'attaque 10 et la pièce d'appui 8. Pour que le parallélogramme ne s'aplatisse pas sous l'effet de la charge 9, un pont réunit les coins du parallélogramme qui ne sont pas disposés sur la ligne d'action 15 de la charge 9.

Le pont est composé de deux cales 16 et 17 qui sont réunies par un boulon 18 et une vis 19. Le boulon 18 est du type à fragilité étalonnée et il a une section affaiblie 20 en son centre. Les plaques rectangulaires reposent par paires par leurs arêtes arrondies dans des rainures de forme adaptée des quatre éléments disposés aux quatre coins du parallélogramme, à savoir la pièce d'attaque 10, la pièce d'appui 8, la cale 16 et la cale 17.

Le boulon 18, qui traverse les deux cales, est mis en place avant l'application de la charge 9, la longueur du boulon définie par la vis 19 étant choisie pour que le parallélogramme devienne approximativement un carré. Lorsqu'on applique alors progressivement la charge 9, cette charge est transmise sans modification à la pièce d'appui, tant que le boulon 18 supporte la charge qui lui est appliquée dans le parallélogramme. La limite de rupture du boulon 18 est choisie de sorte que la charge correspondante 9 excède légèrement celle nécessaire pour bloquer par friction les deux barres de test 1 et 2 lorsque ces dernières sont soumises aux efforts de test (flèches 3 à 6). Pour la libération brusque des barres de test, il suffit alors de faire dépasser cette limite par la charge 9, auquel cas le boulon 18 se casse à la section 20 et la charge 9 cesse brusquement d'agir sur la pièce d'appui 8. Les plaques rectangulaires et les morceaux du boulon tombent par terre ou sont collectionnés dans un boîtier de protection non représenté.

La force appliquée par le poinçon 8, 10 à 14 et 16 à 19 est strictement perpendiculaire à l'axe des barres 1, 2 et de ce fait ne peut pas falsifier les forces de traction (flèches 3, 5) auxquelles sont soumises les barres de test 1 et 2.

Il est également possible de monter le poinçon à 90° par rapport à la position représentée sur la figure. Dans ce cas, l'axe du boulon 18 est perpendiculaire au plan de la figure. Il est également possible, dans le cadre de l'invention, de bloquer une seule barre entre la matrice et la pièce d'appui ou même plus que deux barres. Dans la dernière de ces alternatives, les barres doivent être déposées dans un même plan, qui est perpendiculaire au plan de la figure et qui inclut l'axe des deux barres 1 et 2, les axes des différentes barres devant couper la ligne d'action 15 de la charge 9.

Enfin, il est également possible de commander l'instant de libération des barres en appliquant une charge explosive à la section affaiblie 20.

## Revendications

1. Dispositif permettant de bloquer et de libérer brusquement au moins une barre de test (1, 2) soumise à des efforts de traction et/ou de torsion (3 à 6), caractérisé en ce que ladite barre (1,2) est coincée par friction entre un poinçon mobile et une matrice stationnaire (7), la charge (9) du poinçon agissant perpendiculairement à l'axe de la barre (1,2), que le poinçon est composé d'une pièce d'appui (8) s'appuyant sur la barre (1, 2), d'une pièce d'attaque (10) de la charge, qui est disposée en face de la pièce d'appui (8), de quatre plaques rectangulaires (11 à 14) disposées en parallélogramme entre lesdites pièces d'appui et d'attaque de telle sorte que deux plaques voisines (13, 14) reposent chacune par l'une de leurs grandes arêtes sur la pièce d'appui (8) et que les deux autres plaques (11, 12) reposent chacune par l'une de leurs grandes arêtes sur la pièce d'attaque (10), et d'un pont à fragilité étalonnée (16 à 19) qui est en contact avec les arêtes restantes des quatre plaques (11 à 14) et empêche le parallélogramme de s'aplatir sous l'effet de la charge (9), tant que celle-ci n'est pas susceptible de casser le pont (16 à 19).

2. Dispositif selon la revendication 1, caractérisé en ce que ledit pont (16 à 19) s'étend parallèlement à l'axe de la barre (1, 2).

3. Dispositif selon l'une des revendications 1 et 2, caractérisé en ce que le pont est composé d'un boulon à fragilité étalonnée (18), d'une vis (19) et de deux cales (16, 17), dont chacune est en contact avec deux desdites plaques (11, 13; 12, 14), les cales étant traversées par ledit boulon (18).

4. Dispositif selon l'une des revendications 1 à 3, caractérisé en ce qu'il sert simultanément à bloquer deux barres (1, 2) disposées en alignement, une extrémité de chaque barre étant coincée entre ledit poinçon (10 à 14; 16 à 18) et ladite matrice (7).

## Patentansprüche

1. Vorrichtung zum Blockieren und schlagartigen Freigeben mindestens eines Teststabs (1, 2), der Zug- und/oder Torsionskräften (3 bis 6) ausgesetzt ist, dadurch gekennzeichnet, daß der Stab (1, 2) durch Reibung zwischen einem beweglichen Stempel und einer ortsfesten Matrize (7) eingeklemmt ist, wobei die Last (9) des Stempels senkrecht zur Achse des Stabes (1, 2) wirkt, daß der Stempel aus einem Stützelement (8), das sich auf dem Stab (1, 2) abstützt, einem Angriffselement (10) für die Last, das gegenüber dem Stützelement (8) angeordnet ist, vier Rechteckplatten (11 bis 14), die parallelogrammförmig zwischen dem Stützelement und dem Angriffselement angeordnet sind, derart, daß zwei benachbarte Platten (13, 14) jeweils mit einer ihrer großen Kanten auf dem Stützelement (8) aufsitzen, während die anderen beiden Platten (11, 12) jeweils mit einer ihrer großen Kanten auf dem Angriffsstück (10) aufsitzen, und einer Brücke (16 bis 19) mit Sollbruchstelle besteht, die in Berührung mit den restlichen Kanten der vier Platten (11 bis 14) steht, und das Parallelogramm daran hindert, sich unter der Einwirkung der Last (9) abzuplatten, solange die Brücke (16 bis 19) nicht bricht.

2. Vorrichtung nach Anspruch 1, dadurch gekennzeichnet, daß sich die Brücke (16 bis 19) parallel zur Achse des Stabes (1, 2) erstreckt.

3. Vorrichtung nach Anspruch 1 oder 2, dadurch gekennzeichnet, daß die Brücke aus einem Schraubbolzen (18) mit Sollbruchstelle, einer Mutter (19) und zwei Druckblöcken (16, 17) besteht, von denen jeder in Berührung mit zwei Platten (11, 13; 12, 14) steht, wobei die Druckblöcke vom Bolzen (18) durchdrungen werden.

4. Vorrichtung nach einem der Ansprüche 1 bis 3, dadurch gekennzeichnet, daß sie zugleich zum Blockieren zweier in einer Flucht angeordneter Stäbe (1, 2) dient, wobei ein Ende jedes Stabs zwischen dem Stempel (10 bis 14; 16 bis 18) und der Matrize (7) eingeklemmt ist.

## Claims

1. A device suited for blocking and abruptly releasing at least one test bar (1, 2) subjected to tensile and/or torsional forces (3 to 6), characterized in that the bar (1, 2) is blocked by way of friction between a mobile punch and a stationary matrix (7), with the load (9) of the punch attacking perpendicularly to the axis of the bar (1, 2), that the punch is composed of a support member (8) resting upon the bar (1, 2), of a load attack member (10), which is disposed face to the support member (8), of four rectangular plates (10 to 14) arranged in a parallelogram type configuration between said support and attack members, such that two adjacent plates (13, 14) rest upon the support member (8), each by one of its long edges and that the two other plates (11, 12) rest on the attack member (10), each by one of its long edges, and of a calibrated fragility bridge (16 to 19), which is in contact with the remaining edges of the four plates (11 to 14) and prevents the parallelogram from flattening under the impact of the load (9) as long as the latter is unable to break the bridge (16 to 19).

2. A device according to claim 1, characterized in that said bridge (16 to 19) extends parallelly to the axis of the bar (1, 2).

3. A device according to claim 1 or 2, characterized in that the bridge is composed of a calibrated fragility bolt (18), a nut (19) and two chocks (16, 17), each of which is in contact with two of said plates (11, 13; 12, 14), the chocks being traversed by said bolt (18).

4. A device according to any one of claims 1 to 3, characterized in that it serves to block simultaneously two bars (1, 2) which are disposed in alignment with one another, one end of each bar being blocked between the punch (10 to 14) and the matrix (7).